(19) Europäisches Patentamt
European Patent Office
Office européen des brevets

(11) **EP 4 653 554 A1**

(12) **EUROPEAN PATENT APPLICATION**
published in accordance with Art. 153(4) EPC

(43) Date of publication:
**26.11.2025 Bulletin 2025/48**

(21) Application number: **23926417.9**

(22) Date of filing: **10.11.2023**

(51) International Patent Classification (IPC):
**C21C 5/52** (2006.01)     **C21B 11/10** (2006.01)

(52) Cooperative Patent Classification (CPC):
**C21B 11/10; C21C 5/52;** Y02P 10/20

(86) International application number:
**PCT/JP2023/040492**

(87) International publication number:
**WO 2024/185211 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.03.2023 JP 2023034262**

(71) Applicant: JFE Steel Corporation
**Tokyo 100-0011 (JP)**

(72) Inventors:
- **OGASAWARA, Futoshi**
  **Tokyo 100-0011 (JP)**
- **ODA, Nobuhiko**
  **Tokyo 100-0011 (JP)**
- **TSUTSUMI, Koichi**
  **Tokyo 100-0011 (JP)**
- **NAKAI, Yoshie**
  **Tokyo 100-0011 (JP)**

(74) Representative: **Hoffmann Eitle**
**Patent- und Rechtsanwälte PartmbB**
**Arabellastraße 30**
**81925 München (DE)**

(54) **MOLTEN-IRON PRODUCTION METHOD**

(57) Provided is a technology for melting a cold iron source with high productivity and reduced electric power unit consumption. Specifically, provided is a method for producing molten iron by melting a cold iron source with electric energy, using an electric furnace, the method including disposing a burner in the electric furnace, the burner including an injection hole that injects a fuel, and an injection hole that injects a combustion-supporting gas, the burner being adapted to inject a flame from the injection hole toward a furnace content in the electric furnace; and when blowing in a powdery or powdered auxiliary raw material such that the auxiliary raw material passes through the flame formed by the burner, adjusting a supply rate of the auxiliary raw material or a supply rate of the fuel for the burner in accordance with a melting condition of the cold iron source in the electric furnace.

[Fig. 1]

EP 4 653 554 A1

## Description

Technical Field

The present invention relates to a method for melting a cold iron source with high productivity and with reduced electric power unit consumption.

Background Art

In recent years, from the perspective of preventing global warming, the iron and steel industry has also developed methods to reduce $CO_2$ gas emissions by reducing fossil fuel consumption. In conventional integrated steel plants, molten pig iron is produced by reducing iron ore with carbon. To produce such molten pig iron, about 500 kg of a carbon source is required per ton of molten pig iron for processes including iron ore reduction. Meanwhile, producing molten steel using a cold iron source such as iron scrap or solid reduced iron as the main raw material does not require a carbon source used for iron ore reduction, but only a sufficient amount of heat energy to melt the cold iron source. This can significantly reduce CO2 emissions.

An operation using a high content of a cold iron source is often carried out using an electric furnace, such as an arc furnace or an induction melting furnace. In such cases, most of the heat for melting the cold iron source is provided by electric power. For example, in a typical operation of an arc furnace, the following methods are adopted to increase productivity and reduce the electric power unit consumption. 1) An auxiliary burner is arranged on a furnace wall or in a slag removal port to promote the melting of a cold iron source at a cold spot, for example. 2) A so-called oxygen-enriched operation for providing oxidization heat for iron is performed by supplying oxygen through an oxygen-gas supply lance.

However, the oxygen-enriched operation has a problem of causing reduced yield due to the oxidation loss of iron. Moreover, when an auxiliary burner is used, a burner flame is formed in the upper portion of the furnace body above the surface of molten iron. This results in low heat imparting efficiency to the molten iron in the furnace, with most of the heat supplied being discharged as sensible heat in an exhaust gas. Therefore, even if the electric power unit consumption can be reduced, the effect of reducing the total amount of energy input, including fuel, is small. Against this background, there has been a demand for a heat supply means that can impart heat to molten iron and a cold iron source in a furnace with high efficiency.

As a high-efficiency heat supply means, for example, Patent Literatures 1 and 2 respectively disclose a method of installing a lance for supplying powdery particulate ore, other than a top-blowing lance used for supplying an oxidizing gas, in an iron-bath-type smelting reduction furnace. This method involves equipping the distal end of the lance with a circulation hole for ore and also providing a burner that features an injection hole for introducing fuel and oxygen, allowing ore to be supplied in such a way that it can pass through the flame produced by the burner. The patent literatures indicates that as ore heated in the flame transfers heat to the molten iron within the furnace, the efficiency of utilizing the combustion heat of the burner improves significantly; and that heat transfer from the gas produced by the burner combustion in the burner flame to the powdery particulate material results in a reduction in the temperature of the gas generated through burner combustion, leading to lowering the exhaust gas temperature.

Citation List

Patent Literature

   Patent Literature 1: Japanese Patent Laid-Open No. 2007-138207
   Patent Literature 2: Japanese Patent Laid-Open No. 2008-179876

Summary of Invention

Technical Problem

However, the conventional method has the following problems.
When heating with the burner alone without supplying powdery material into the burner flame, the heat imparting efficiency of the burner combustion heat to the molten iron within the furnace is low, as described above. Then, the amount of sensible heat in the exhaust gas increases to discharge heat outside the furnace. As described in Patent Literatures 1 and 2, adding the powdery particulate material allows the burner combustion heat to be transferred to the powdery material, lowering the temperature of the gas produced by the burner combustion. However, a low supply rate of the powdery particulate material corresponds to a small heat transfer amount, resulting in low heat imparting efficiency to the molten iron in the furnace and a small extent of temperature drop of the combustion gas. As a condition for high heat imparting efficiency to molten iron in a furnace and a reduced exhaust gas temperature, Patent Literature 2 specifies that the powder-fuel ratio S/Q should be 0.3 or more during a smelting reduction process, provided that S (kg/min) represents a supply rate of a powdery material, and Q (MJ/min) represents a heat quantity from a burner fuel per unit time. That is, Patent Literature 2 specifies that it is necessary to supply powdery particulate material in a sufficient amount relative to burner combustion heat.

This means that the amounts of heat generated by the burner and heat that can be imparted to the molten iron in the furnace are limited by the amount of the powdery particulate material that can be supplied during the refining process. When an excess of powdery particulate material is added in the refining process compared to the amount of powdery auxiliary raw material originally required, additional sensible heat is required to heat the excess powdery particulate material to the temperature of molten iron. This results in a heat loss that is greater than the amount of heat supplied by the burner.

The present invention has been made in view of the above circumstances, and it is an object of the present invention to provide an electric furnace with a high-efficiency heat supply means, and a method for melting a cold iron source with high productivity and reduced electric power unit consumption.

Solution to Problem

A method for producing molten iron according to the present invention that advantageously solves the above problems involves melting a cold iron source with electric energy using an electric furnace, the method being characterized by

disposing a burner in the electric furnace, the burner including an injection hole that jets fuel and an injection hole that blows a combustion-supporting gas, thereby emitting a flame from the injection hole toward a furnace content in the electric furnace; and,

when blowing in a powdery or powdered auxiliary raw material such that the auxiliary raw material passes through the flame formed by the burner, adjusting a supply rate of the auxiliary raw material or a supply rate of the fuel used for the burner, in accordance with a melting condition of the cold iron source in the electric furnace.

Note that the method for producing molten iron according to the present invention may include the following features, for example, which are considered to be more preferable solution means.

(a) The supply rate of the auxiliary raw material or the supply rate of fuel for the burner is adjusted so that, provided that a heat quantity from the fuel used for the burner per unit time is Q (MJ/min) and a supply rate of the auxiliary raw material is S (kg/min), a powder-fuel ratio S/Q (kg/MJ) satisfies the relationship of Expression (1): $S/Q \geq 0.3 \times (1-L/Lh)$ (where L represents a distance (m) in a vertical direction between a highest position of an unmelted portion of the cold iron source and a position of an upper surface of molten metal in the electric furnace, and is defined as 0 when there is no unmelted portion of the cold iron source at a position above the upper surface of the molten metal, and Lh represents a distance (m) in the vertical direction between a distal end position of the burner and the position of the upper surface of the molten metal).

(b) The electric furnace is an arc furnace, and a minimum distance between an electrode that generates an arc and the burner is set at least 1.1 times a distance La from a distal end of the electrode to the furnace content.

Advantageous Effects of Invention

According to the present invention, powdery particulate material is supplied via a burner flame, and powdery particulate material is heated in the flame and converted into a heat transfer medium. This process enables the efficient utilization of burner combustion heat to heat a cold iron source and molten iron within a melting chamber of an electric furnace, thereby reducing the amount of electric power used. Further, when a large amount of cold iron source remains unmelted in the electric furnace, it can be directly heated with a burner flame. Since the surface area of a cold iron source present on molten metal is large compared to the molten metal, burner combustion heat can be imparted to the cold iron source in the furnace with high efficiency.

Conventional methods require a sufficient amount of a powdery particulate material to be supplied to achieve high heat imparting efficiency. However, the present invention can achieve a high heat imparting efficiency by directly heating the unmelted portion of cold iron source in the electric furnace, even when the heat quantity from fuel is excessively large with respect to the supply amount of the powdery particulate material, specifically, even when the burner combustion heat contributes to heating the powdery material at a low level.

Brief Description of Drawings

[Fig. 1] Fig. 1 is a schematic longitudinal sectional view illustrating a DC arc furnace as an electric furnace according to an embodiment of the present invention.

[Fig. 2] Fig. 2 is a schematic longitudinal sectional view of the distal end portion of a burner lance used in the foregoing embodiment.

Description of Embodiments

Hereinafter, an embodiment of the present invention will be specifically described. Note that the drawings are only schematic, and may differ from the actual ones. In addition, the following embodiment only illustrates examples of an apparatus and a method for embodying the technical idea of the present invention. Thus, the configuration of the present invention is not limited thereto. That is, the technical idea of the present invention may be changed in various ways within the technical scope recited in the claims.

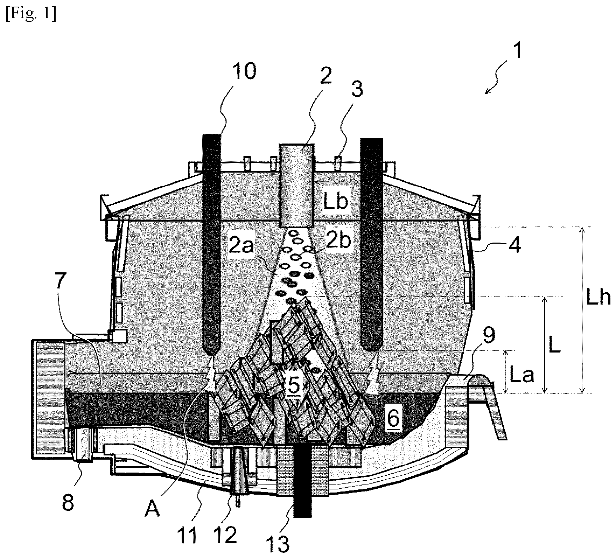

Fig. 1 is a schematic longitudinal sectional view illustrating an overview of a DC arc furnace 1 as an electric furnace according to an embodiment of the present invention, and illustrates a configuration pattern of the operation of the DC electric arc furnace.

In the present embodiment, a burner lance 2 is ascendably and descendably inserted into the electric furnace 1 through a burner lance insertion hole provided in a furnace lid 3. Although Fig. 1 illustrates an example in which the burner lance 2 is ascendably and descendably inserted perpendicularly through the furnace lid, the present invention is not limited thereto. The burner lance 2 may be inserted obliquely into the furnace from above a furnace wall. In addition, the form of the burner is not limited to the ascendable and descendable lance, and the burner may be configured such that its nozzle portion is fixed to the furnace lid 3 or a furnace wall 4. Further, the burner may be provided with an oxygen blowing function to blow oxygen from the burner. The burner lance 2 injects a burner flame 2a toward the surface of the furnace content, such as a cold iron source 5 and molten iron 6, housed in the electric furnace 1.

Note that an oxygen blowing lance and a carbonaceous material blowing lance may be inserted into the electric furnace 1 either through the furnace lid 3 from above, or through a slag removal port.

A carbonaceous material containing, for example, one or more of coke, char, coal, charcoal, and graphite may be blown into molten slag 7 through the carbonaceous material blowing lance, using air, nitrogen, or the like as a carrier gas. In addition, oxygen may be supplied (injected) through the oxygen blowing lance so that the oxygen can be blown into the molten iron 6 by pushing aside the molten slag 7.

Instead of pure oxygen, an oxygen-containing gas, such as a mixed gas of pure oxygen and air, may be blown in through the oxygen blowing lance.

The electric furnace 1 has a taphole 8 at a furnace bottom 11. In addition, a slag removal port 9 is provided on the side opposite to the taphole 8. The taphole 8 is closed with plugging sand and a mud agent filled therein, for example. The slag removal port 9 has the shape of a gutter and can remove slag by tilting the furnace body of the electric furnace 1.

Electrodes 10 are inserted into the upper portion of the electric furnace 1 from above through the openable/closable furnace lid 3 with a water-cooled structure. Meanwhile, a furnace-bottom electrode 13 is provided as a counter electrode through the furnace bottom 11. A furnace-bottom-electrode cooling device and a secondary conductor (which are not illustrated) are also provided for the furnace-bottom electrode 13. The furnace-bottom electrode 13 conducts electricity to the molten iron 6 and the cold iron source 5. As arcs form between them and the electrodes 10, the cold iron source 5 melts, while the molten iron 6 is heated within an arc heating portion A. The electrodes 10 are typically made of graphite, for example, and are configured to be movable up and down. The furnace bottom 11 may be provided with a bottom-blowing tuyere 12 to allow for agitation with a gas blown in through the bottom-blowing tuyere 12. Although Fig. 1 illustrates an example in which two electrodes 10 are used, the number of electrodes 10 may be one or three or more. In the example of Fig. 1, the burner lance 2 is arranged between the two electrodes.

Fig. 1 illustrates a state in which iron scraps are charged as the cold iron source 5, and the supply of an electric current is started to melt the cold iron source 5. During the process, a powdery auxiliary raw material 2b is blown from the burner lance 2 through the burner flame 2a to promote the melting of the cold iron source 5. This operation is preferably performed with a fuel composed mainly of hydrocarbon or a hydrogen gas produced with renewable energy, such as sunlight, wind power, or water power. The fuel mainly composed of a hydrogen gas refers to a hydrogen gas or a hydrogen-rich gaseous fuel. The hydrogen-rich gaseous fuel can be a mixed gas of a hydrogen gas and a methane gas, a natural gas, or a petroleum gas. From the perspective of reducing $CO_2$ emissions, the mixed gas preferably contains 50 vol% or more of a hydrogen gas.

Although the DC arc furnace 1 including two electrodes is used as the electric furnace in the above embodiment, the electric furnace may be an AC arc furnace including three electrodes, for example.

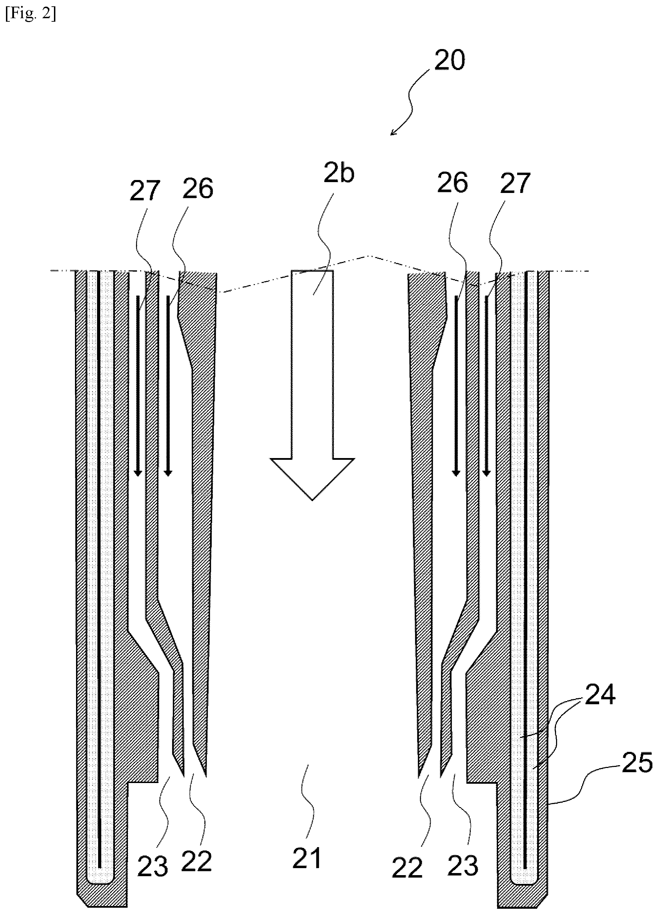

Fig. 2 illustrates a schematic view of a distal end portion 20 of the burner lance 2 as one configuration example of the burner lance 2 used in the above embodiment. A powder supply pipe 21 with an injection hole is arranged in the center, and a fuel supply pipe 22 and a combustion-supporting gas supply pipe 23 each having an injection hole are arranged in this order around the powder supply pipe 21. An outer shell 25 with a cooling water passage 24 is provided on the outer side thereof. A fuel gas 26 and a combustion-supporting gas 27 are supplied through the injection holes provided in the outer peripheral portion of the powder supply pipe 21 so that the burner flame 2a is formed. Then, the powdery auxiliary raw material 2b injected through the powder supply pipe 21 is heated in the burner flame 2a. Accordingly, the powdery auxiliary raw material 2b becomes a heat transfer medium, which can increase the heat imparting efficiency of the flame to the furnace content, such as the cold iron source 5 and the molten iron 6. Consequently, the amount of electric power can be reduced. As the combustion-supporting gas 27, not only pure oxygen, but also a mixed gas of oxygen and $CO_2$ or an inert gas; air; or oxygen-rich air is applicable. Further, an inert gas or a combustion-supporting gas can be used as a gas for carrying the powdery auxiliary raw material 2b as a powdery material.

In the method for producing molten iron according to the present embodiment, for example, the cold iron source 5, such as iron scraps or solid reduced iron, is first charged into an electric furnace, such as the DC arc furnace 1 illustrated in Fig. 1, from a bucket (not shown). After the cold iron source 5 is first charged into the electric furnace, the supply of an electric current is started. Then, the burner lance 2 arranged in the upper portion within the furnace is inserted into the electric furnace 1 so that the cold iron source 5 is heated with electric power and with the combustion heat of the burner flame 2a.

When the first-charged cold iron source 5 has melted further and reached a flat bath state, that is, a state in which the cold iron source 5 is immersed in the molten iron 6 even if the cold iron source 5 has an unmelted portion, slag is removed through the slag removal port 9 as appropriate. Then, the supply of an electric current as well as the use of the burner may be stopped, and the furnace lid 3 may be opened to charge the cold iron source 5 for the second time. After the second charge of the cold iron source 5, it is preferable to resume the supply of an electric current to perform an operation of heating the burner in a manner similar to that after the first charge. The number of times the cold iron source 5 is charged may be three or more.

The inventors examined the heat imparting efficiency to the furnace content using the electric furnace 1 such as the one illustrated in Fig. 1, by varying the flow rate of a fuel gas and the supply rate of a powdery material. Herein, the ratio of the supply rate S (kg/min) of the auxiliary raw material 2b to the heat quantity Q (MJ/min) per unit time of the fuel 26 used for the burner 2 is represented by a powder-fuel ratio S/Q (kg/MJ).

Consequently, it was observed that supplying a sufficient amount of the powdery material relative to the heat quantity from the fuel gas increased the heat imparting efficiency to the furnace content, while reducing the combustion flame temperature. In the case of the flat bath, setting the powder-fuel ratio S/Q to 0.3 (kg/MJ) or more enabled the burner combustion heat to be imparted to the furnace content with high efficiency, achieving the effects of reducing the electric power unit consumption and increasing productivity. However, when the heat quantity Q from the fuel was excessively large relative to the supply rate S of the powdery material, specifically, when the powder-fuel ratio S/Q was less than 0.3 (kg/MJ), the exhaust gas temperature increased. In addition, the heat imparting efficiency to the furnace content was reduced, and also the effects of reducing the electric power unit consumption and increasing productivity were reduced. This is considered that, as the heat quantity Q from the fuel was excessively large relative to the supply rate S of the powdery material, the burner combustion heat was not sufficiently imparted to the powdery material and thus was discharged to the outside of the furnace as the sensible heat of the exhaust gas.

Meanwhile, high heat imparting efficiency could still be achieved even with the powder-fuel ratio S/Q of less than 0.3 (kg/MJ) when a large amount of unmelted portion of the cold iron source 5 remained in the furnace and accumulated above the surface of the molten iron 6. This is considered to be because the large surface area of the cold iron source 5, which was present above the bath surface, allowed it to be effectively heated directly by a burner flame. Therefore, it is considered that burner combustion heat could efficiently transfer to the furnace content, even when the powder- fuel ratio (S/Q) was low. As the amount of the unmelted portion of the cold iron source 5 in the furnace increased, and as the height of the accumulated cold iron source 5 also rose, a greater effect of directly imparting heat was observed, achieving high heat imparting efficiency even with a reduced powder-fuel ratio S/Q. In summary, the powder-fuel ratio S/Q (kg/MJ) needed to be set to $0.3 \times (1-L/Lh)$ or more, where L (m) represents the distance in the vertical direction between the highest position of the unmelted portion of the cold iron source 5 and the position of the upper surface of the molten metal in the electric furnace, and Lh (m) represents the distance in the vertical direction between the distal end position of the burner and the position of the upper surface of the molten metal. If the powder-fuel ratio S/Q (kg/MJ) was less than the value, the heat imparting efficiency was reduced. Note that if no unmelted portion of the cold iron source 5 is present above the upper surface of the molten metal, that is, in the flat bath state, L is defined as 0. Note also that the position of the upper surface of the molten metal changes every moment as the melting of the cold iron source 5 progresses. Thus, Lh is preferably adjusted correspondingly.

During the installation of the burner lance 2 in the arc furnace 1, an arc was observed jumping from the electrode to the burner lance 2 when the distance between the burner lance 2 and the graphite electrode 10 was too short, that is, they were too closely arranged, causing wear damage to the burner lance 2. This shows that it is necessary to sufficiently secure the shortest distance Lb between the burner lance 2 and the electrode 10 with respect to the distance La between the electrode 10 and the furnace content at an arc at a given voltage. The shortest distance Lb between the burner lance 2 and the electrode 10 is the distance between the surface of the electrode and the surface of the burner lance. In summary, the shortest distance Lb between the burner lance 2 and the electrode 10 needs to be set 1.1 times or more the distance La between the electrode 10 and the furnace content. If the shortest distance Lb is less than that, an arc may be generated between the electrode 10 and the burner lance 2.

In the present embodiment, a slag forming material, which is the powdery or powdered auxiliary raw material 2b, dust, etc., may be used as the powdery material. To efficiently heat the powdery material in a burner flame, it is necessary to increase the specific surface area of the powdery material, and the particle size thereof is preferably approximately 100 $\mu$m or less. When the particle size of the auxiliary raw material is large, it is preferable to reduce the particle size to approximately 100 $\mu$m or less, for example, by grinding. Herein, the particle size is expressed by the 50% passing rate in terms of volume.

Any electric furnace is applicable as long as it can melt the cold iron source with electric energy to obtain molten iron. For example, in addition to the DC or AC arc furnace described above, an arc furnace such as a submerged arc furnace may be used, in which heating is performed by submerging a Söderberg self-baking electrode or the like in the slag. In addition, an indirect resistance furnace may be used, in which an object to be heated is heated with radiation from a heating element provided in the furnace, convection in the furnace, and conductive heat transfer. A plasma arc melting furnace may be also used.

The molten iron 6 melted in the present embodiment has a composition corresponding to the metal composition of the iron scrap or solid reduced iron used as the main raw material, and is typically molten steel with a relatively low C content. To adjust the components, additional processes may be performed in the same electric furnace where the melting was performed, including the addition of alloy, and finishing decarburization and dephosphorization by oxygen refining. Further, secondary refining, such as molten steel desulfurization and vacuum degassing, may be performed after tapping. Subsequently, a semi-finished product, such as a cast slab, is produced through a casting step such as continuous casting.

Examples

(Example 1)

Cold iron source melting tests were performed using a DC arc furnace as an electric furnace. Scrap was used as the cold iron source, with a total charge amount set at 100 tons.

The electric furnace had a furnace lid provided with a burner lance including a fuel supply line and an oxygen supply line, and the distal end portion of the burner lance was formed to have a multiple-pipe structure similar to that illustrated in Fig. 2. A propane gas was used as a burner fuel. Comparisons were made between the following three cases: a case where no burner was used (process No. 1), a case where the furnace content was heated with a burner flame alone with a burner fuel supplied but without a powdery material supplied (process No. 2), and a case where powdery lime was blown into a burner flame (process Nos. 3 to 10). The tapping temperature was set at 1650°C.

After the supply of an electric current started, the melting of the first-charged cold iron source progressed, reducing the height of the charged materials in the furnace until a flat bath state was reached. At this point, the burner lance was lowered to apply heat from the burner flame as well. An argon gas was used as a carrier gas to supply a powdery material. A total of 50 kg of powdery lime per ton of molten iron was supplied into the electric furnace at a supply rate of 100 kg/min. A propane gas as a fuel gas was supplied at a flow rate varying in the range of 2.2 to 11.1 Nm$^3$/min for each heating process of the electric furnace. The powder-fuel ratio S/Q was found to be in the range of 0.1 to 0.51 kg/MJ. In addition, an oxygen gas was supplied as a combustion-supporting gas to burn propane as the fuel gas in each heating process. After slag was removed through the slag removal port, the electric current supply and the burner operation were stopped, and the furnace lid was then opened to charge the cold iron source for the second time. After the second charge of the cold iron source, the electric current supply was resumed to perform an operation in a manner similar to that after the first charge. Thus, molten steel at 1650°C was eventually obtained and tapped into a ladle.

Comparisons were made between process conditions based on electric power unit consumption, processing time of the electric furnace, and the efficiency of imparting burner combustion heat. Electric power unit consumption is an index value obtained by dividing the amount of electric power used for each process condition by the amount of electric power used for process No. 1. The processing time of the electric furnace corresponds to the time (min) from the start of the electric current supply to the start of tapping. The efficiency of imparting burner combustion heat is the ratio of the amount of heat imparted to the furnace content to the total heat quantity from a burner fuel. Table 1 presents the results.

[Table 1]

| No. | Burner | | | | Electric power unit consumption index | Processing time of electric furnace | Efficiency of imparting burner combustion heat | Remarks |
|---|---|---|---|---|---|---|---|---|
| | Use | Supply rate S of powdery material | Supply rate of propane | Powder-fuel ratio S/Q | | | | |
| | Used/ Not used | kg/min | Nm$^3$/min | kg/MJ | - | min | % | |
| 1 | Not Used | - | - | - | 1.00 | 80 | - | Conventional Example |
| 2 | Used | - | 2.2 | - | 1.00 | 80 | 15 | Comparative Example |
| 3 | Used | 100 | 2.2 | 0.51 | 0.95 | 76 | 70 | Invention Example |
| 4 | Used | 100 | 2.8 | 0.40 | 0.90 | 72 | 70 | Invention Example |
| 5 | Used | 100 | 3.2 | 0.35 | 0.85 | 68 | 70 | Invention Example |
| 6 | Used | 100 | 3.7 | 0.30 | 0.80 | 64 | 70 | Invention Example |
| 7 | Used | 100 | 4.0 | 0.28 | 0.79 | 63 | 55 | Invention Example |
| 8 | Used | 100 | 4.4 | 0.25 | 0.79 | 63 | 40 | Invention Example |
| 9 | Used | 100 | 5.6 | 0.20 | 0.78 | 62 | 30 | Invention Example |
| 10 | Used | 100 | 11.1 | 0.10 | 0.77 | 62 | 20 | Invention Example |

In process No. 2 where the furnace content was heated by a burner flame alone, burner combustion heat was not effectively imparted to the furnace content, and the electric power unit consumption and the processing time of the electric furnace were substantially the same as those of process No. 1 where no burner was used. In each of processes No. 3 to 10 where powdery lime was heated in a burner flame, the electric power unit consumption and processing time of the electric furnace were reduced. This is because the powdery lime was heated in the burner flame, with some of the burner combustion heat being transferred to the furnace content. However, when the heat quantity from fuel was excessively large relative to the supply rate of powdery lime, the efficiency of imparting burner combustion heat decreased, reducing the effect of reducing the electric power unit consumption and the processing time of the electric furnace. This is because the amount of heat transferred to the powdery lime has peaked, resulting in an increased ratio of the burner combustion heat discharged as the sensible heat of an exhaust gas.

(Example 2)

Molten steel was produced by melting a cold iron source, using a facility configuration and a fuel similar to those of Example 1. The tapping temperature was set at 1650°C. After the supply of an electric current started, the melting of the first-charged cold iron source progressed, reducing the height of the charged materials in the furnace until a space was formed in the upper portion of the furnace. At this point, the burner lance was lowered to apply heat from the burner flame as well. An argon gas was used as a carrier gas to supply a powdery material. A total of 50 kg of powdery lime per ton of molten iron was supplied into the electric furnace at a supply rate of 100 kg/min. When an unmelted portion of the cold iron source accumulated in the furnace, the powder-fuel ratio S/Q was controlled to $0.3 \times (1-L/Lh)$ or more, where L (m) represents the distance between the highest position of the cold iron source and the upper surface of the molten metal, and Lh (m) represents the distance in the vertical direction between the distal end position of the burner lance and the upper surface of the molten metal, and the flow rate of the propane gas was varied to allow for a larger amount to flow. Lh was 2.0 m, and as a result of monitoring the inside of the furnace, L changed from 1.4 m to 0 m (the flat bath state). During the period, the flow rate of the propane gas was varied within the range from 12.3 $Nm^3$/min to 3.7 $Nm^3$/min. The powder-fuel ratio S/Q corresponds to 0.089 kg/MJ to 0.30 kg/MJ.

An oxygen gas was supplied as a combustion-supporting gas to burn the propane as the fuel gas during the process. After slag was removed through the slag removal port, the electric current supply and the burner operation were stopped, and the furnace lid was opened to charge the cold iron source for the second time. After the second charge of the cold iron source, the electric current supply was resumed to perform an operation in a manner similar to that after the first charge. Thus, molten steel at 1650°C was eventually obtained and tapped into a ladle.

Each process condition was examined based on electric power unit consumption, processing time of the electric furnace, and the efficiency of imparting burner combustion heat. Electric power unit consumption is an index value obtained by dividing the amount of electric power used for each process condition by the amount of electric power used for process No. 1 of Example 1. The processing time of the electric furnace corresponds to the time (minutes) from the start of the electric current supply to the start of tapping. The efficiency of imparting burner combustion heat is the ratio of the amount of heat imparted to the furnace content relative to the heat quantity from burner fuel. Table 2 presents the results.

[Table 2]

| | Burner | | | | Electric power unit consumption index | Processing time of electric furnace | Efficiency of imparting burner combustion heat | Remarks |
|---|---|---|---|---|---|---|---|---|
| No. | Use | Supply rate S of powdery material | Supply rate of propane | Powder-fuel ratio S/Q | | | | |
| | Used/ Not Used | kg/min | $Nm^3$/min | kg/MJ | - | min | % | |
| 11 | Used | 100 | 12.3 to 3.7 | 0.089 to 0.30 | 0.60 | 48 | 80 | Invention Example |

(Example 3)

The relationship between the shortest distance Lb between the electrode, which generates an arc, and the burner lance, and the distance La between the electrode and the upper surface of the molten metal, was examined by changing the insertion position of the burner lance under the operation condition of process No. 6 in Example 1.

Each process condition was examined based on electric power unit consumption, processing time of the electric furnace, and the efficiency of imparting burner combustion heat. The electric power unit consumption is an index value obtained by dividing the amount of electric power used for each process condition by the amount of electric power used for process No. 1 of Example 1. The processing time of the electric furnace corresponds to the time (minutes) from the start of the electric current supply to the start of tapping. The efficiency of imparting burner combustion heat is the ratio of the amount of heat imparted to the furnace content relative to the heat quantity from burner fuel. The distance between the electrode and the burner is represented by the ratio of Lb/La. Table 2 presents the results.

[Table 3]

| | Burner | | | | Lb/La | Electric power unit consumption index | Processing time of electric furnace | Efficiency of imparting burner combustion heat | Remarks |
|---|---|---|---|---|---|---|---|---|---|
| No. | Use | Supply rate S of powdery material | Supply rate of propane | Powder-fuel ratio S/Q | | | | | |
| | Used/ Not Used | kg/min | $Nm^3$/min | kg/MJ | - | - | min | % | |
| 12 | Used | 100 | 3.7 | 0.30 | 0.8 | | | | * |
| 13 | Used | 100 | 3.7 | 0.30 | 1.0 | | | | * |
| 14 | Used | 100 | 3.7 | 0.30 | 1.1 | 0.80 | 64 | 70 | |

(continued)

| No. | Burner | | | | Lb/La | Electric power unit consumption index | Processing time of electric furnace | Efficiency of imparting burner combustion heat | Remarks |
|---|---|---|---|---|---|---|---|---|---|
| | Use | Supply rate S of powdery material | Supply rate of propane | Powder-fuel ratio S/Q | | | | | |
| | Used/ Not Used | kg/min | Nm$^3$/min | kg/MJ | - | - | min | % | |
| 15 | Used | 100 | 3.7 | 0.30 | 1.3 | 0.80 | 64 | 70 | |
| 16 | Used | 100 | 3.7 | 0.30 | 1.5 | 0.80 | 64 | 70 | |
| *Note: In process Nos. 12 and 13, an arc jumped to the burner lance, resulting in an operation failure. | | | | | | | | | |

In each of processes No. 12 and 13 where the distance between the burner lance and the electrode was short, an arc jumped to the burner lance, resulting in an operation failure. In the condition where the shortest distance Lb between the burner lance and the electrode was 1.1 times or more the distance La between the electrode and the surface of the molten metal, a stable operation was possible without any problems.

The unit "t" of mass used in this specification represents $10^3$ kg. Symbol "N" added to the unit of the volume of a gas represents the volume in the standard state, that is, at a temperature of 0°C and a pressure of 101325 Pa.

Industrial Applicability

According to the method for producing molten iron of the present invention, it is possible to melt a cold iron source using a heat source with increased heat delivery efficiency and reduced $CO_2$ emissions, and thus reduce the electric power unit consumption as well as environmental burdens, which is industrially advantageous. Such a method can be suitably applied to a process of a refining furnace or the like that needs a heat source with reduced $CO_2$ emissions and also needs the addition of a powdery auxiliary raw material.

Reference Signs List

1       DC arc furnace (electric furnace)
2       burner lance
2a      burner flame
2b      (powdery) auxiliary raw material
3       furnace lid
4       furnace wall
5       cold iron source (iron scrap)
6       molten iron
7       (molten) slag
8       taphole
9       slag removal port
10      electrode
11      furnace bottom
12      bottom-blowing tuyere
13      furnace-bottom electrode
20      distal end portion (nozzle) of burner lance
21      powder supply pipe
22      fuel supply pipe
23      combustion-supporting gas supply pipe
24      cooling water passage
25      outer shell
26      fuel gas
27      combustion-supporting gas

28    cooling water
A    arc heating portion

**Claims**

1.  A method for producing molten iron by melting a cold iron source with electric energy, using an electric furnace, comprising:

    disposing a burner in the electric furnace, the burner including an injection hole that jets fuel and an injection hole that blows a combustion-supporting gas, thereby emitting a flame from the injection hole toward a furnace content in the electric furnace; and,
    when blowing in a powdery or powdered auxiliary raw material such that the auxiliary raw material passes through the flame formed by the burner, adjusting a supply rate of the auxiliary raw material or a supply rate of the fuel used for the burner, in accordance with a melting condition of the cold iron source in the electric furnace.

2.  The method for producing molten iron according to claim 1, wherein

    the supply rate of the auxiliary raw material or the supply rate of the fuel for the burner is adjusted so that, provided that a heat quantity from the fuel used for the burner per unit time is Q (MJ/min), and the supply rate of the auxiliary raw material is S (kg/min), a powder-fuel ratio S/Q (kg/MJ) satisfies Expression (1) below:

$$S/Q \geq 0.3 \times (1 - L/Lh)...(1),$$

    where L represents a distance (m) in a vertical direction between a highest position of an unmelted portion of the cold iron source and a position of an upper surface of molten metal in the electric furnace, and is defined as 0 when there is no unmelted portion of the cold iron source at a position above the upper surface of the molten metal, and further, Lh represents a distance (m) in the vertical direction between a distal end position of the burner and the position of the upper surface of the molten metal.

3.  The method for producing molten iron according to claim 1, wherein

    the electric furnace is an arc furnace, and
    a minimum distance between an electrode that generates an arc and the burner is set at least 1.1 times a distance La from a distal end of the electrode to the furnace content.

[Fig. 1]

[Fig. 2]

## INTERNATIONAL SEARCH REPORT

| | International application No. |
|---|---|
| | **PCT/JP2023/040492** |

| | |
|---|---|
| **A.** | **CLASSIFICATION OF SUBJECT MATTER** |

*C21C 5/52*(2006.01)i; *C21B 11/10*(2006.01)i
FI: C21C5/52; C21B11/10

According to International Patent Classification (IPC) or to both national classification and IPC

| | |
|---|---|
| **B.** | **FIELDS SEARCHED** |

Minimum documentation searched (classification system followed by classification symbols)

C21C5/52; C21B11/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | JP 2000-008115 A (NKK CORP.) 11 January 2000 (2000-01-11) | 1, 3 |
| | paragraphs [0001]-[0038], fig. 2 | |
| Y | | 1-3 |
| X | JP 2018-016832 A (JFE STEEL CORPORATION) 01 February 2018 (2018-02-01) | 1, 3 |
| | paragraphs [0001]-[0048], fig. 1-3 | |
| Y | | 1-3 |
| Y | JP 2008-179876 A (JFE STEEL CORPORATION) 07 August 2008 (2008-08-07) | 1-3 |
| | paragraphs [0018]-[0020], [0035]-[0041], fig. 1-7 | |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 January 2024** | **06 February 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2023/040492**

| Patent document cited in search report | | | Publication date (day/month/year) | Patent family member(s) | Publication date (day/month/year) |
|---|---|---|---|---|---|
| JP | 2000-008115 | A | 11 January 2000 | (Family: none) | |
| JP | 2018-016832 | A | 01 February 2018 | (Family: none) | |
| JP | 2008-179876 | A | 07 August 2008 | (Family: none) | |

Form PCT/ISA/210 (patent family annex) (July 2022)

**EP 4 653 554 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007138207 A
- JP 2008179876 A